(19) Europäisches Patentamt
European Patent Office
Office européen des brevets

(11) Veröffentlichungsnummer: **0 136 430**
**B1**

(12) # EUROPÄISCHE PATENTSCHRIFT

(45) Veröffentlichungstag der Patentschrift: **12.08.87**

(51) Int. Cl.⁴: **B 25 J 18/06**

(21) Anmeldenummer: **84108435.3**

(22) Anmeldetag: **17.07.84**

(54) **Industrieroboter mit zweigliedrigem Gelenkarm.**

(30) Priorität: **27.07.83 DE 3326962**

(43) Veröffentlichungstag der Anmeldung: **10.04.85 Patentblatt 85/15**

(45) Bekanntmachung des Hinweises auf die Patenterteilung: **12.08.87 Patentblatt 87/33**

(84) Benannte Vertragsstaaten: **AT BE CH DE FR GB IT LI LU NL SE**

(56) Entgegenhaltungen:
**EP-A-0 082 386**
**DE-B-2 855 132**
**GB-A-1 464 952**
**GB-A-2 060 556**

(73) Patentinhaber: **Göllner, Josef, jr., Westfalenweg 27, D-4790 Paderborn- Schloss Neuhaus (DE)**

(72) Erfinder: **Göllner, Josef, jr., Westfalenweg 27, D-4790 Paderborn- Schloss Neuhaus (DE)**

(74) Vertreter: **Patentanwälte TER MEER - MÜLLER - STEINMEISTER, Artur- Ladebeck- Strasse 51, D-4800 Bielefeld 1 (DE)**

**EP 0 136 430 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft einen Industrieroboter mit einem zweigliedrigem Gelenkarm und einem Antrieb zum Schwenken eines das erste Glied des Gelenkarms bildenden Tragarms in Bezug auf einen Träger und eines das zweite Glied des Gelenkarms bildenden Werkzeugarms um eine zu der Schwenkachse des Tragarms parallele Achse in Bezug auf den Tragarm.

Bei derartigen Industrierobotern ist am freien Ende des Werkzeugarms ein Werkzeug oder ein Arbeitsgerät für verschiedenartige Zwecke, beispielsweise ein Schraubenzieher oder Schraubenschlüssel, ein Greifer zum Greifen von Werkstücken, ein Schweißgerät oder dergleichen montierbar. Der Gelenkarm dient dazu, das Werkzeug in eine geeignete Arbeitsposition zu überführen und/oder ein von dem Werkzeug erfaßtes Werkstück von einer Bearbeitungsstation zur nächsten zu transportieren. Im einfachsten Fall wird dabei der Gelenkarm als Ganzes geschwenkt, so daß das Werkzeug bzw. das Werkstück am Ende des Werkzeugarms eine kreisbogenförmige Bahn beschreibt. Insbesondere beim Transport größerer Lasten ist es jedoch schwierig, die bei einer derartigen Kreisbewegung auftretenden Fliehkräfte zu beherrschen. Es sind daher Antriebe und Antriebssteuerungen für den Gelenkarm entwickelt worden, die es gestatten, übermäßige Fliehkräfte durch eine geeignete Überlagerung der Schwenkbewegung des Tragarms und des Werkzeugarms zu vermeiden. Vorzugsweise werden die Bewegungen der beiden Glieder des Gelenkarms derart aufeinander abgestimmt, daß sich das freie Ende des Werkzeugarms zumindest annähernd geradlinig bewegt.

Bei herkömmlichen Industrierobotern der genannten Art umfaßt der Antrieb eine Antriebseinheit für den Tragarm und eine von dieser unabhängige Antriebseinheit für den Werkzeugarm sowie eine elektronische Steuerung, die die Bewegungen der beiden Antriebseinheiten entsprechend einem gespeicherten Programm koordiniert. Da in diesem Fall die Antriebseinheiten derart gesteuert werden müssen, daß ihre Geschwindigkeiten auch bei unterschiedlicher Belastung sorgfältig aufeinander abgestimmt sind, ist eine verhältnismäßig aufwendige Steuerung erforderlich. Dies gilt um so mehr, als in der Regel verlangt wird, daß unterschiedliche Bewegungsabläufe auf möglichst einfache Weise einprogrammiert werden können.

Der Erfindung liegt daher die Aufgabe zugrunde, die Antriebssteuerung für den Tragarm und den Werkzeugarm insbesondere bei annähernd geradliniger Bewegung des freien Endes des Werkzeugarms zu vereinfachen.

Diese Aufgabe wird erfindungsgemäß dadurch gelöst, daß der Antrieb ein gemeinsames Antriebsaggregat für den Tragarm und den Werkzeugarm und ein Verteilergetriebe umfaßt, das das Antriebsaggregat einerseits mit dem Tragarm und andererseits über ein Umkehrgetriebe mit, dem Werkzeugarm verbindet.

Erfindungsgemäß sind somit die Schwenkbewegungen des Tragarms und des Werkzeugarms mechanisch gekoppelt, und es braucht lediglich ein einziges Antriebsaggregat gesteuert zu werden. Hierdurch ergibt sich eine erhebliche Vereinfachung der Steuerung und zudem eine bauliche Vereinfachung, da kein gesondertes Antriebsaggregat für den Werkzeugarm erforderlich ist.

Bevorzugt weisen der Tragarm und der Werkzeugarm annähernd die gleiche Länge auf, d.h., der Abstand zwischen den Schwenkachsen dieser beiden Arme stimmt mit dem Abstand des Werkzeugs von der Schwenkachse des Werkzeugarms überein. In Bezug auf den Träger, an dem der Tragarm schwenkbar befestigt ist, werden der Tragarm und der Werkzeugsarm gegensinnig, aber mit gleichem Übersetzungsverhältnis angetrieben. Die Winkeländerung des Werkzeugarms in Bezug auf den Tragarm beträgt daher das Doppelte der Winkeländerung des Tragarms in Bezug auf den Träger. Unter diesen Bedingungen bewegt sich das Werkzeug längs einer Geraden, die mit dem Tragarm und dem Werkzeugarm ein gleichschenkliges Dreieck bildet.

Die jeweils gewünschte Bewegungsbahn des Werkzeugs kann eingestellt werden, indem die Bewegung des Tragarms und des Werkzeugarms vorzugsweise innerhalb des Umkehrgetriebes vorübergehend entkoppelt werden. Das Umkehrgetriebe umfaßt einen linear beweglichen Schlitten und zwei als Eingangs- und Ausgangselemente dienende Ritzel auf entgegengesetzten Seiten des Schlittens. Die Umdrehung des Eingangsritzels fürt zu einer Verschiebung des Schlittens und damit zu einer Drehung des Ausgangsritzels im entgegengesetzten Drehsinn. Während eines der beiden Ritzel unmittelbar mit dem Schlitten in Eingriff steht, ist das andere Ritzel mittelbar über ein längs des Schlittens verschiebbares Gleitstück mit dem Schlitten verbunden. Die Verschiebung des Gleitstücks gestattet es somit, das Ausgangsritzel unabhängig von dem Eingangsritzel zu drehen. Wenn das Gleitstück dagegen in Bezug auf den Schlitten arretiert wird, sind die beiden Ritzel und damit der Tragarm und der Werkzeugarm wieder gekoppelt.

Im folgenden wird ein bevorzugtes Ausführungsbeispiel der Erfindung anhand der Zeichnungen näher erläutert.

Fig. 1 ist eine Seitenansicht eines erfindungsgemäßen Industrieroboters:

Fig. 2 ist eine schematische Frontansicht des Industrieroboters;

Fig. 3 ist eine Rückansicht eines Umkehrgetriebes;

Fig. 4 ist eine teilweise aufgeschnittene Seitenansicht des Umkehrgetriebes.

Gemäß Figuren 1 und 2 umfaßt ein erfindungsgemäßer Industrieroboter einen feststehenden Sockel 10, einen L-förmigen Träger 12 und einen Gelenkarm 14. Der Träger 12 ist mit Hilfe eines Motors 16 und eines Zahnriementriebes 18 um eine vertikale Achse in Bezug auf den Sockel 10 drehbar. Der Gelenkarm 14 umfaßt einen an einem aufragenden Schenkel 20 des Trägers 12 montierten, um eine waagerechte Achse B schwenkbaren Tragarm 22 und einen an das freie Ende des Tragarms 22 angelenkten Werkzeugarm 24. Der Werkzeugarm 24 ist in Bezug auf den Tragarm 22 um eine Parallel zu der Achse B verlaufende Achse C schwenkbar und trägt an seinem freien Ende ein Werkzeug 26.

Wie in Figur 2 schematisch dargestellt ist, nimmt der Schenkel 20 des Trägers 12 ein Antriebsaggregat, beispielsweise einen Elektromotor 28 und ein Getriebe 30 zum Antrieb des Gelenkarms 14 auf. Das Getriebe 30 umfaßt ein Umkehrgetriebe 32 und ein Verteilergetriebe 34 in der Form einer mit dem Tragarm 22 verbundenen Hohlwelle 36 mit zwei Zahnkränzen 38, 40, von denen einer über einen Zahnriemen 42 mit einem Ausgangszahnrad des Elektromotors 28 und der andere über einen Zahnriemen 44 mit einem Eingangszahnrad des Umkehrgetriebes 32 verbunden ist. Durch das Verteilergetriebe 34 wird somit die Antriebsleistung des Elektromotors 28 einerseits auf den Tragarm 22 und andererseits auf das Umkehrgetriebe 32 übertragen.

Ein Ausgangszahnrad 46 des Umkehrgetriebes 32 ist über einen Zahnriemen 48 mit einem Zahnkranz einer koaxial durch die Hohlwelle 36 verlaufenden Welle 50 verbunden. Innerhalb des Tragarms 22 steht die Welle 50 über einen weiteren Zahnriemen 52 mit einer Antriebswelle 54 des Werkzeugarms 24 in Verbindung. Das Umkehrgetriebe 32 bewirkt lediglich eine Umkehr des Drehsinns und weist ebenso wie die Kraftübertragungen über die Zahnriemen 44, 48, 52 ein Übersetzungsverhältnis von 1:1 auf. Die Hohlwelle 36 und die Welle 50 und damit der Tragarm 22 und der Werkzeugarm 24 werden somit durch den Elektromotor 28 gegensinnig mit gleicher Geschwindigkeit angetrieben. Zu beachten ist jedoch, daß sich die Winkelgeschwindigkeit der Welle 50 und des Werkzeugarms 24 dabei auf den Träger 12 bezieht. Bezieht man die Winkelgeschwindigkeit des Werkzeugarms 24 auf den Tragarm 22, so ergibt sich aufgrund der Gegenläufigkeit der Bewegung die doppelte Winkelgeschwindigkeit.

Die Wirkung des oben beschriebenen Gelenkarm-Antriebs soll nunmehr anhand von Figur 1 erläutert werden.

Im gezeigten Beispiel weisen der Tragarm 22 und der Werkzeugarm 24 annähernd die gleiche Länge auf. Der Abstand des Punktes A am freien Ende des Werkzeugarms 24 zu der Achse C des Werkzeugarms stimmt exakt mit dem Achsabstand

$$\overline{B\ C}$$

überein. Die Punkte A, B, C bilden somit ein gleichschenkliges Dreieck mit der Seite

$$\overline{A\ B}$$

als Basis. Die Basiswinkel $\alpha,\beta$ stimmen überein.

Bei der nachfolgenden Überlegung soll die Gerade C durch A und B aus unveränderlich in Bezug auf den Träger 12 betrachtet werden. Wenn der Tragarm 22 mit Hilfe des Elektromotors 28 derart geschwenkt wird, daß der Winkel $\beta$ sich um $\Delta\beta$ auf $\beta'$ verringert, so bewirkt das Getriebe 30, daß der Winkel $\gamma$ um $2x\ \Delta\beta$ auf $\gamma'$ zunimmt. Da die Winkelsumme im Dreieck erhalten bleibt, muß der Winkel $\alpha$ ebenfalls um $\Delta\beta$ auf $\alpha'$ abnehmen, und es gilt $\alpha' = \beta'$. Das heißt, die Arme 22, 24 bilden wieder ein gleichschenkliges Dreieck A' B C' mit der als raumfest angenommenen Geraden c. Bei der Bewegung des Gelenkarms bewegt sich somit der Punkt A am freien Ende des Werkzeugarms 24 exakt auf einer geraden Linie, nämlich der Geraden c.

Die geradlinige Bewegung wird somit ohne aufwendige Steuerungmaßnahmen erreicht. Eine Steuerung des Elektromotors 28 ist nur noch insoweit erforderlich, als während der Bewegung die Einhaltung einer bestimmten Geschwindigkeit gewünscht wird.

Da sich im gezeigten Beispiel das Werkzeug 26 nicht genau im Punkt A befindet, ergibt sich für das Werkzeug eine leicht geschwungene, der Geraden lediglich angenäherte Bewegung. Diese Abweichung von der Geraden kann unter Umständen durchaus erwünscht sein. In einer abgewandelten Ausführungsform kann der Werkzeugarm 24 teleskopartig ausfahrbar sein, so daß sich bei jeder Gestaltung des Werkzeugs eine geradlinige Bewegung eines bestimmten Punktes des Werkzeugs bzw. des mit diesem erfaßten Werkstücks erzielen läßt.

Als Bewegungsgerade kann anstelle der Geraden c durch jede durch den Punkt B in der Zeichenebene der Figur 1 verlaufende Gerade gewählt werden. Zu diesem Zweck werden der Tragarm 22 und der Werkzeugarm 24 vorübergehend entkoppelt und das Werkzeug 16 wird beispielsweise manuell zu der gewünschten Zielposition geführt. Wenn die Arme 22, 24 anschließend wieder gekoppelt werden, erfolgt die Bewegung automatisch längs der Geraden, die durch diesen Zielpunkt und den Punkt B verläuft. Geraden außerhalb der Zeichenebene der Figur 1 können eingestellt werden, indem der Träger 12 um seine vertikale Achse gedreht wird. Wahlweise können zusätzliche Verstellmöglichkeiten, beispielsweise eine Höhenverstellung des Trägers 12 und/oder eine horizontale Verschiebung des Sockels 10 vorgesehen sein, so daß die Bewegung des Werkzeugs 26 längs jeder beliebigen Geraden im Raum erfolgen kann.

Figuren 3 und 4 zeigen ein Ausführungsbeispiel des Umkehrgetriebes 32. Das Umkehrgetriebe umfaßt ein langgestrecktes, im Querschnitt

rechteckiges Gehäuse 56, in dem ein Schlitten 58 längs einer Führung 60 verschiebbar ist. Der Schlitten 58 weist seinerseits eine zu der Führung 60 parallele Führung 62 auf, in der ein Gleitstück 64 verschiebbar ist. Das Gleitstück 64 steht mit einer Spindel 66 in Gewindeeingriff. Die Spindel 66 ist in axialer Richtung in Bezug auf den Schlitten 58 festgelegt und mit Hilfe eines Stellmotors 68 drehbar. Das Gleitstück 64 ist somit in unterschiedlichen Längspositionen an dem Schlitten 58 arretierbar.

Unterhalb des Schlittens 58 erstreckt sich eine Eingangswelle 70 quer durch das Gehäuse 56. Die Eingangswelle 70 trägt außerhalb des Gehäuses 56 das Eingangszahnrad 72, das mit dem in Figur 3 nicht gezeigten Zahnriemen 44 kämmt, und innerhalb des Gehäuses 56 ein Eingangsritzel 74. Über das Eingangsritzel 74 verläuft ein durch Spannrollen 76 gespannter Zahnriemen 78, der mit beiden Enden fest an den Enden des Gleitstücks 64 verankert ist. Die Spannrollen 76 sind jeweils auf einer Welle 80 derart in dem Gehäuse 56 gelagert, daß sie den Zahnriemen 78 fest gegen das Antriebsritzel 74 spannen.

In entsprechender Weise ist oberhalb des Gleistücks 58 eine Ausgangswelle 82 angeordnet, die das Ausgangszahnrad 46 und ein Ausgangsritzel 84 trägt. Ein über weitere Spannrollen 76 gespannter Zahnriemen 86 verläuft über das Ausgangsritzel 84 und ist mit beiden Enden an den Enden des Schlittens 58 verankert.

Die Antriebsleistung des Elektromotors 28 wird über das Verteilergetriebe 34 und den Zahnriemen 44 auf das Eingangszahnrad 72 und weiter über die Eingangswelle 70 und das Eingangsritzel 74 auf den Zahnriemen 78 übertragen. Wenn der Stellmotor 68 abgeschaltet und blockiert ist, bewegen sich das Gleitstück 64 und der Schlitten 58 gemeinsam in Längsrichtung des Gehäuses 56, und der Zahnriemen 86 treibt das Ausgangsritzel 84 gegensinnig zu dem Eingangsritzel 74. Wenn dagegen der Stellmotor 68 betätigt wird, verschiebt sich der Schlitten 58 in Bezug auf das Gleitstück 64, und das Ausgangsritzel 84 führt eine von der Bewegung des Eingangsritzels 74 unabhängige Bewegung aus. auf diese Weise kann mit Hilfe des Stellmotors 68 der Werkzeugarm 24 bei feststehendem Tragarm 22 in die gewünschte Position geschwenkt werden.

Wahlweise können der den Hauptantrieb bildende Elektromotor 28 und der Stellmotor 68 auch gleichzeitig betrieben werden. In diesem Fall wird die Bewegung des Gelenkarms 14 im wesentlichen durch den Elektromotor 28 und das Getriebe 30 angetrieben und gesteuert, während mit Hilfe des Stellmotors 68 Feinkorrekturen der Bewegung des Werkzeugarms 24 ausgeführt werden. Eine derartige Aufteilung der Funktionen der beiden Antriebe in Grob- und Feinsteuerung erleichtert unter bestimmten Bedingungen die Steuerung und Programmierung komplexer Bewegungsabläufe.

Bei dem gezeigten Beispiel des Umkehrgetriebes entspricht die Länge des Gleitstücks 64 etwa dem Umfang des Eingangsritzels 74, so daß der Werkzeugarm 24 mit Hilfe des Elektromotors 28 in einem Winkelbereich von 360° in Bezug auf den Träger 12 geschwenkt werden kann. Die Länge des Schlittens 58 ist größer als die des Gleitstücks 64, damit auch dann noch der volle Schwenkbereich zur Verfügung steht, wenn der Schlitten 58 in Bezug auf das Gleitstück 64 verhältnismäßig weit aus der Mittelstellung verschoben wurde.

Der Eingriff zwischen den Ritzeln 74, 84 und dem Gleitstück 64 bzw. dem Schlitten 58 kann statt über Zahnriemen auch über Zahnstangen erfolgen. Die Verwendung von Zahnriemen hat jedoch den Vorteil, daß die Kraftübertragung weitgehend spielfrei erfolgt und ruckartige Beanspruchungen besser absorbiert werden können.

Die Erfindung ist auch auf Gelenkarme mit mehr als zwei Gliedern anwendbar, sofern es die Platzverhältnisse gestatten, den Getriebezug zur Betätigung der einzelnen Arme jeweils bis in das Trägergehäuse zu führen.

**Patentansprüche**

1. Industrieroboter mit einem zweigliedrigem Gelenkarm (14) und einem Antrieb zum Schwenken eines das erste Glied des Gelenkarms bildenden Tragarms (22) in Bezug auf einen Träger (12) und eines das zweite Glied des Gelenkarms bildenden Werkzeugarms (24) um eine zu der Schwenkachse des Tragarms Parallele Achse in Bezug auf den Tragarm, dadurch gekennzeichnet, daß der Antrieb ein gemeinsames Antriebsaggregat (28) für den Tragarm (22) und den Werkzeugarm (24) und ein Verteilergetriebe (34) umfaßt, das das Antriebsaggregat (28) einerseits mit dem Tragarm (22) und andererseits über ein Umkehrgetriebe (32) mit dem Werkzeugarm (24) verbindet.

2. Industrieroboter nach Anspruch 1, dadurch gekennzeichnet, daß die Länge des Werkzeugarms (24) annähernd mit der des Tragarms (22) übereinstimmt und daß die Getriebezüge für den Tragarm und den Werkzeugarm das gleiche Übersetzungsverhältnis aufweisen.

3. Industrieroboter nach Anspruch 1 oder 2, dadurch gekennzeichnet, daß das Antriebsaggregat (28), das Verteilergetriebe (34) und das Umkehrgetriebe (32) in dem Träger (12) untergebracht sind, daß das Verteilergetriebe (34) über eine Hohlwelle (36) mit dem Tragarm (22) verbunden ist und daß der Ausgang des Umkehrgetriebes (32) über eine durch die Hohlwelle verlaufende Welle (50) und eine Kraftübertragung (52) innerhalb des Tragarms (22) mit dem Werkzeugarm (24) verbunden ist.

4. Industrieroboter nach einem der vorhergehenden Ansprüche, dadurch

gekennzeichnet, daß die Antriebszüge für den Werkzeugarm (24) und den Tragarm (22) entkoppelbar und in unterschiedlichen Winkelstellungen der Arme (22, 24) miteinander koppelbar sind.

5. Industrieroboter nach Anspruch 4, dadurch gekennzeichnet, daß das Umkehrgetriebe (32) ein durch ein Eingangsritzel (74) linear verschiebbares Gleitstück (64) und einen mit einem Ausgangsritzel (84) in Eingriff stehenden, Parallel zu dem Gleitstück (64) verschiebbaren Schlitten (58) umfaßt und daß das Gleitstück (64) in unterschiedlichen Längspositionen in Bezug auf den Schlitten arretierbar ist.

6. Industrieroboter nach Anspruch 5, dadurch gekennzeichnet, daß zum Verstellen der Position des Gleitstücks (64) in Bezug auf den Schlitten (58) eine durch einen Stellmotor (68) antreibbare Spindel (66) vorgesehen ist.

7. Industrieroboter nach Anspruch 5 oder 6, dadurch gekennzeichnet, daß zur Antriebsverbindung des Eingangsritzels (74) mit dem Gleitstück (64) und/oder des Schlittens (58) mit dem Ausgangsritzel (84) ein mit beiden Enden an dem Gleitstück bzw. dem Schlitten verankerter, über Spannrollen (76) und das betreffende Ritzel geführter Zahnriemen (78 bzw. 86) vorgesehen ist.

8. Industrieroboter nach Anspruch 6 oder 7, dadurch gekennzeichnet, daß die Eingangs- und Ausgangsritzel (74, 84) mit einer an dem Gleitstück (64) bzw. dem Schlitten (58) befestigten Zahnstange in Eingriff stehen.

9. Industrieroboter nach einem der Ansprüche 5 bis 8, dadurch gekennzeichnet, daß der Schlitten (58) in Bezug auf das Ausgangsritzel (84) um einen größeren Weg verschiebbar ist als das Gleitstück (64) in Bezug auf das Eingangsritzel (74) und daß der Verschiebeweg des Gleitstücks in Bezug auf das Eingangsritzel annähernd dem Umfang des Eingangsritzels entspricht.

10. Industrieroboter nach einem der vorhergehenden Ansprüche, dadurch gekennzeichnet, daß der Träger (12) um eine senkrechte Achse in Bezug auf einen Sockel (10) drehbar ist und einen aufragenden Schenkel (20) aufweist, an dem der Tragarm (22) um eine waagerechte Achse schwenkbar montiert ist.

## Claims

1. Industrial robot with a two-membered articulated arm (14) and a drive for pivoting a load arm (22) constituing the first member of said articulated arm in relation to a support (12), and for pivoting a tool arm (24) constituting the second member of said articulated arm with respect to the load arm, about an axis parallel to the pivoting axis of the load arm, characterized in that the drive comprises a common driving aggregate (28) for the load arm (22) and the tool arm (24), and a power divider (34) for connecting the driving aggregate (28) on the one hand to the load arm (22) and on the other hand, via a reversing gear (32), to the tool arm (24).

2. Industrial robot according to claim 1, characterized in that the length of the tool arm (24) approximately corresponds with that of the load arm (22), and that the gear trains for the load arm and the tool arm have equal transmission ratios.

3. Industrial robot according to claim 1 or 2, characterized in that the driving aggregate (28), the power divider (34) and the reversing gear (32) are contained in the support (12), that the power divider (34) is connected to the load arm (22) by means of a hollow shaft (36), and that the output of the reversing gear (32) is connected to the tool arm (24) by means of a shaft (50) which passes through the hollow shaft and a power transmission (52) inside the load arm (22).

4. Industrial robot according to one of the preceding claims, characterized in that the drive trains for the tool arm (24) and the load arm (22) are capable of being uncoupled, and capable of being coupled in various angular positions of the arms (22, 24).

5. Industrial robot according to claim 4, characterized in that the reversing gear (32) comprises a sliding block (64) which is linearly movable by means of an input pinion (74), and a slide (58) movable parallel to the sliding block (64), the slide being engaged by an output pinion (84), and that the sliding block (64) is capable of being locked with respect to the slide in various longitudinal positions.

6. Industrial robot according to claim 5, characterized in that a spindle (66), driven by a servomotor (68), is provided for adjusting the position of the sliding block (64) with respect to the slide (58).

7. Industrial robot according to claim 5 or 6, characterized in that toothed belts (78, 86) are provided as the driving connections between the sliding block (64) and the input pinion (74) and/or the slide (58) and the output pinion (84), which toothed belts are anchored with both ends on the sliding block or slide, respectively, and which are lead over tension rollers and the respective pinion.

8. Industrial robot according to claim 6 or 7, characterized in that the input and output pinions (74, 84) engage a toothed rack attached to the sliding block (64) and slide (58), respectively.

9. Industrial robot according to any of the claims 5 to 8, characterized in that the slide (58) is movable in a larger path with respect to the output pinion (84) than is the sliding block (64) with respect to the input pinion (74), and that the sliding path of the sliding block with respect to the input pinion approximately corresponds to the circumference of the input pinion.

10. Industrial robot according to any of the preceding claims, characterized in that the support (12) is rotatable about a vertical axis with respect to a pedestal (10), and that the support has an upwardly jutting side (20) upon which the load arm (22) is mounted and pivotable about a

horinzontal axis.

## Revendications

1. Robot industriel avec un bras articulé en deux pièces (14) et avec un système de commande pour le pivotement d'un bras de support (22) formant le premier élément du bras articulé, par rapport à un support (12) et d'un bras porte-outil (24) formant le deuxième élément du bras articulé, par rapport au bras de support, autour d'un axe parallèle à l'axe de pivotement de ce dernier, caractériaé en ce que le système de commande comprend un mécanisme d'entraînement (28) commun pour le bras de support (22) et le bras port-outil (24) ainsi qu'un engrenage distributeur (34) qui relie le mécanisme d'entraînement (28) au bras de support (22) d'une part et, par l'intermédaire d'un mécanisme de renversement (32), ou bras porte-outil (24), d'autre part.

2. Robot industriel selon la revendication 1, caractérisé en ce que la longueur du bras porte-outil (24) correspond approximativement à celle du bras de support (22) et que les trains d'engrenages pour le bras de support et le bras porte-outil ont le même rapport de démultiplication.

3. Robot industriel selon l'une des revendications 1 ou 2, caractérisé en ce que le mécanisme d'entraînement (28), l'engrenage distributeur (34) et le mécanisme de renversement (32) sont logé dans le support (12), que l'engrenage distributeur (34) est relié par l'intermédiaire d'un arbre creux (36) au bras de support (22), et que la sortie du mécanisme de renversement (32) est couplée avec le bras porte-outil (24) par l'intermédiaire d'un arbre (50) s'etendant au travers de l'arbre creux et d'un mécanisme de transmission (52) disposé à l'intérieur du bras de support (22).

4. Robot industriel selon l'une quelconque des revendications 1 à 3, caractérisé en ce que les trains d'engrenages pour le bras porte-outil (24) et le bras de support (22) peuvent être découplés et couplés l'un avec l'autre dans des positions angulaires différentes des bras (22, 24).

5. Robot industriel selon la revendication 4, caractérisé en ce que le mécanisme de renversement (32) comprend une coulisse (64) pouvant être déplacée linéairement par un pignon d'entrée (74) et un coulisseau (58) cooperant avec un pignon de sortie (84) et pouvant être déplacé parallèlement à la coulisse (64), et que la coulisse (64) peut être bloquée dans différentes positions longitudinales par rapport au coulisseau.

6. Robot industriel selon la revendication 5, caractérisé en ce que, pour le changement de la position de la coulisse (64) par rapport au coulisseau (58), il est prévu une broche (66) pouvant être entraînée par un servomoteur (68).

7. Robot industriel selon l'une des revendications 5 ou 6, caractérisé en ce que, pour le couplage d'entraînement du pignon d'entrée (74) avec la coulisse (64) et/ou du coulisseau (58) avec le pignon de sortie (84), il est prévu une courroie dentée (78 et respectivement 86) ancrée aux deux extrémitès sur la coulisse et respectivement le coulisseau et guidée sur des rouleaux de tension (76) et le pignon considéré.

8. Robot industriel selon l'une des revendications 6 ou 7, caractérisé en ce que les pignons d'entrée et de sortie (74, 84) coopèrent avec une crémaillère fixée sur la coulisse (64) et respectivement sur le coulisseau (58).

9. Robot industriel selon l'une quelconque des revendications 5 à 8, caractérisé en ce que le coulisseau (58) peut être desplacé par rapport au pignon de sortie (84) sur une distance plus grande que la coulisse (64) par rapport au pignon d'entrée (74), et que le déplacement de la coulisse par rapport au pignon d'entrée correspond approximativement à la circonférence dudit pignon d'entrée.

10. Robot industriel selon l'une quelconque des revendications 1 à 9, caractérisé en ce que le support (12) peut être tourné autour d'un axe vertical par rapport à un socle (10) et qu'il comprend une branche ascendante (20) sur laquelle le bras de support (22) est monté de façon à pouvoir pivoter autour d'un axe horizontal.

Fig. 1

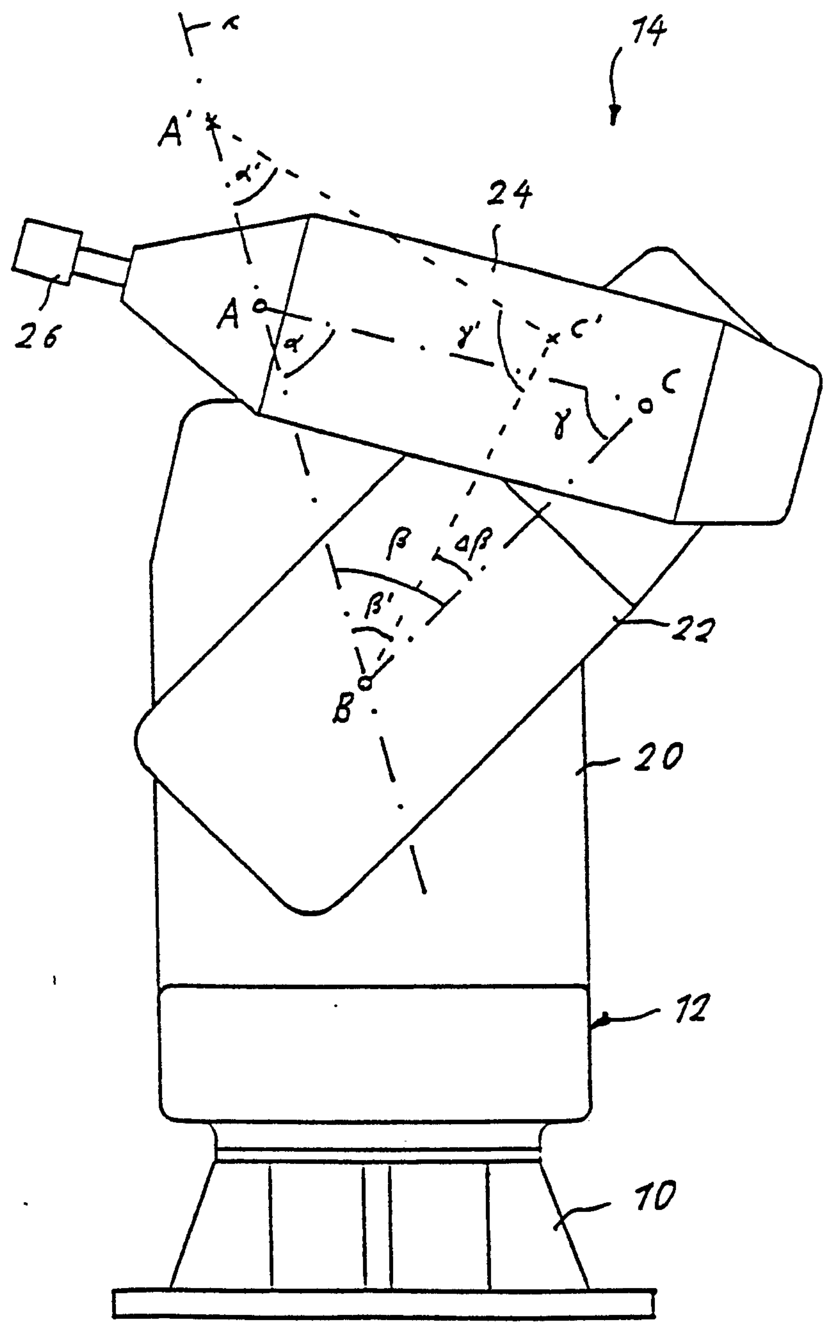

Fig. 2

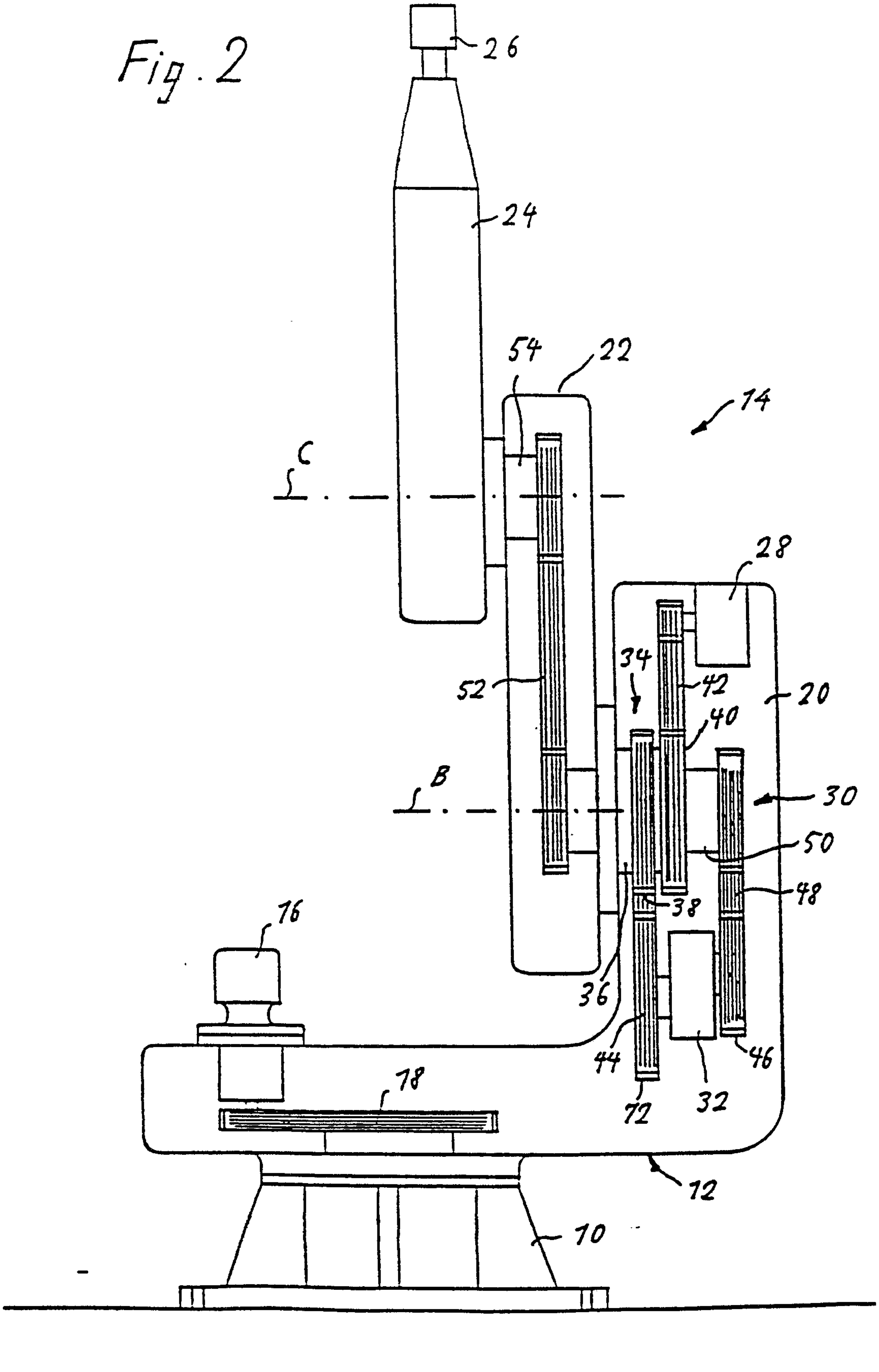
26
24
54
22
14
C
28
52
34
42
20
40
B
30
50
48
38
76
36
44
46
78
72
32
12
10

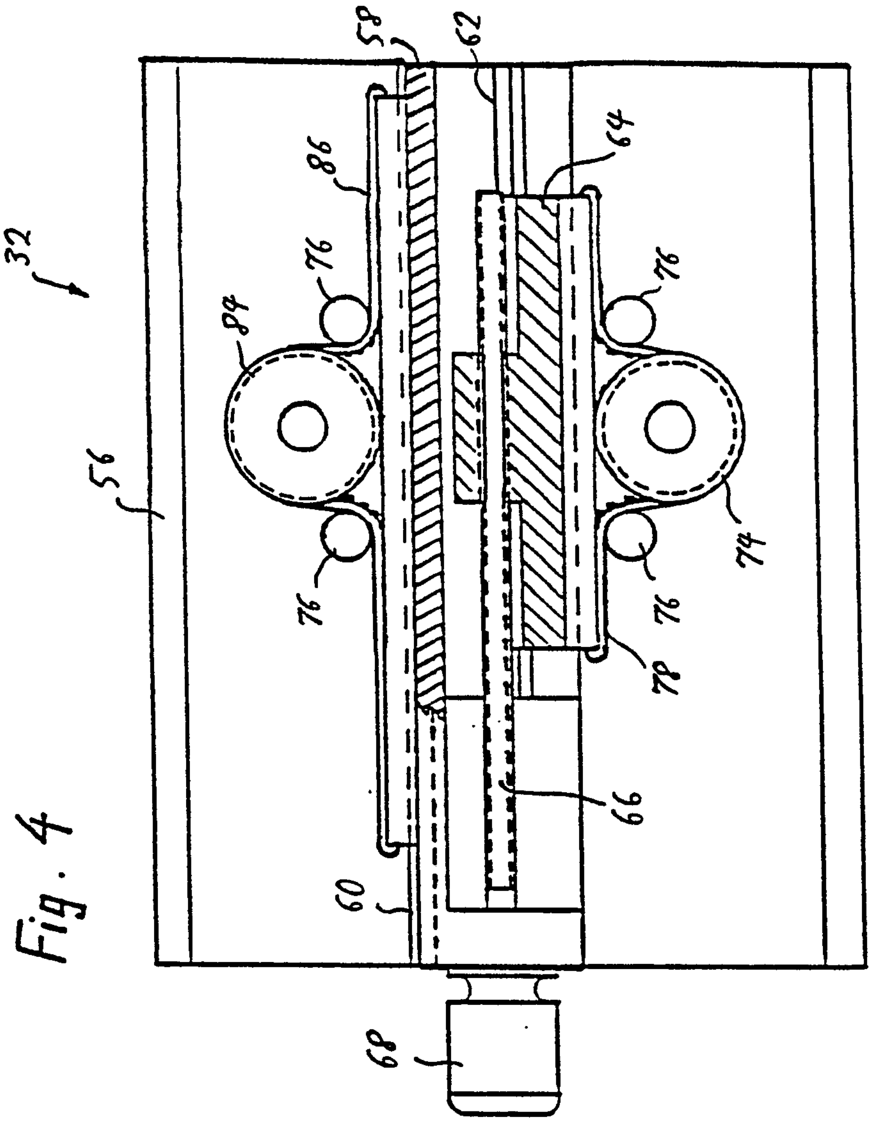
32
56
58
62
64
86
76
84
74
78
66
60
68

Fig. 4

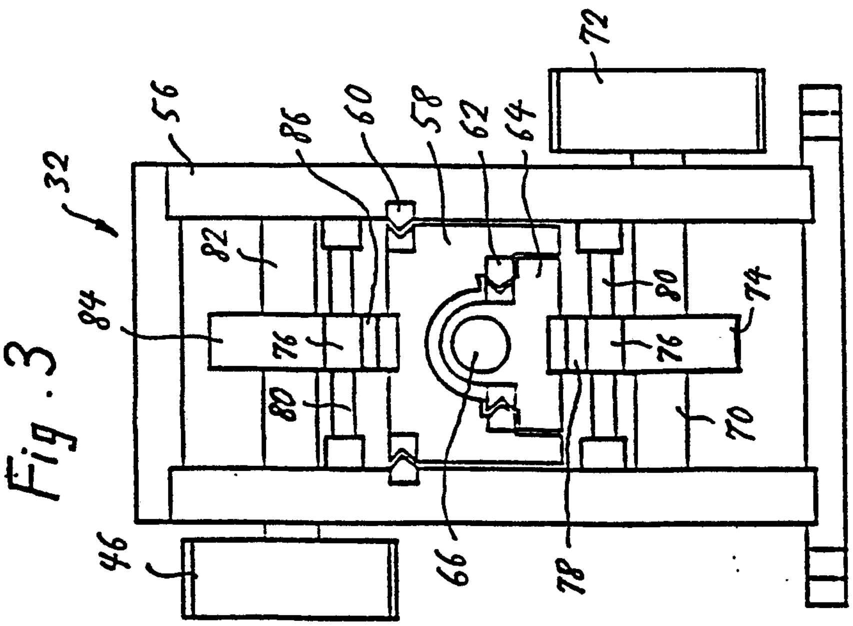
32
56
86
60
58
62
64
72
82
84
76
80
74
70
66
78
46

Fig. 3